# EUROPEAN PATENT APPLICATION

(11) **EP 2 000 702 A2**
(43) Date of publication of application: **10.12.2008**
(21) Application number: 06767053.9
(22) Date of filing: 21.06.2006
(51) Int. Cl.: F16G 5/06, F16G 1/08

(54) **TRANSMISSION BELT**

(30) Priority: 24.03.2006 JP 2006083560
(71) Applicant: Bando Chemical Industries, Ltd., Kobe-shi, Hyogo 652-0883 (JP)
(72) Inventor: YOSHIDA, Yasuhiko, c/o Bando Chemical Industries, Ltd, Kobe-shi, Hyogo 652-0883 (JP); NAKASHIMA, Eijiro, c/o Bando Chemical Industries, Ltd, Kobe-shi, Hyogo 652-0883 (JP)
(74) Representative: Wablat, Wolfgang
(86) International application number: PCT/JP2006/312394
(87) International publication number: WO 2007/110974

(57) **Abstract**

It is an object of the present invention to improve the long-term durability of a power transmission belt. There is provided a power transmission belt **characterized in that** it includes a rubber layer that is formed of a cross-linked rubber composition and extends in a belt lengthwise direction, and core wires that is adhered to the rubber layer and embedded therein in the belt lengthwise direction, in which the rubber layer with the core wires embedded therein is formed to have a tensile stress of 1.1 to 1.7 MPa when the rubber layer is stretched in the belt lengthwise direction by 10% at 125°C.

## Description

### FIELD OF THE INVENTION

The present invention relates to a power transmission belt, and more particularly a power transmission belt that has a rubber layer formed of a cross-linked rubber composition and extending in a belt lengthwise direction, and core wires adhered to the rubber layer and embedded therein in the belt lengthwise direction.

### BACKGROUND OF THE INVENTION

Hitherto, power transmission belts, such as V-belts and V-ribbed belts have been widely known. These power transmission belts each are, for example, formed into an endless shape, which is wound over pulleys respectively disposed on a driving side and a driven side when in use. These power transmission belts each sometimes employ core wires that are formed of polyester fibers or aramid fibers and embedded therein in the belt lengthwise direction, in order to increase the tensile strength in the belt lengthwise direction. As an example of an actual form, an inner circumference portion of the power transmission belt that contacts pulleys is formed of a rubber layer called as a compression rubber layer; a layer adhered to an outer circumference side of the compression rubber layer is formed of a rubber layer called as an adhesive rubber layer; and core wires are embedded in this adhesive rubber layer.

These compression rubber layer and adhesive layer are generally integrally formed by laminating sheets of non-crosslinked rubber compositions together and then cross-linking them; and since the rubber composition used for forming the adhesive rubber layer is sometimes required to have flowability in order to improve adhesiveness to the core wires, a soft rubber composition is hitherto mainly used for the adhesive rubber layer.
Meanwhile, the compression rubber layer is required to be formed with high hardness and elasticity for the purpose of improving a capability for preventing deformation of a power transmission belt as well as improving a power transmission capability. Accordingly, when in use of the power transmission belt, the stress concentration occurs in an interface between the adhesive rubber layer and the core wires, which poses a problem of causing a crack in the interface with time.

For dealing with this problem, Patent Reference 1 referred below discloses an approach to improve the hardness of a rubber layer with core wires embedded therein, and Patent Reference 2 referred below discloses an approach to have the elasticity of a compression rubber layer equal to the elasticity of an adhesive rubber layer.
As a means of improving the hardness of the adhesive rubber layer, Patent Reference 3 referred below discloses a technique, which uses silica coupling agent, hydrated silicate and carbon black, and Patent Reference 4 referred below discloses that short fibers or a large amount of carbon black is contained in an adhesive rubber layer.

However, it is difficult to improve long-term durability merely by improving the elasticity, while it is possible to suppress occurrence of cracks at an early stage of use of the power transmission belt.
Furthermore, Patent Reference 5 referred below discloses that core wires are used by being disposed between a compression rubber layer and an adhesive rubber layer, and being adhered to both the compression rubber layer and the adhesive rubber layer while being partially embedded in the compression rubber layer and the adhesive rubber layer; but it cannot be said that sufficient measures have been taken against cracks in an adhesive interface between the core wires and the adhesive rubber layer even in this Patent Reference 5.

Since a power transmission belt is generally used in proximity to a driving equipment such as an engine and a motor, it is used at a high temperature environment and also the power transmission belt itself generates heat due to friction with pulleys or dynamic heating. In light of this, it is necessary to take into account a measure for heat deterioration and a solid state at high temperature in order to give long-term durability.
In a conventional power transmission belt, a rubber composition is subjected to a countermeasure for heat deterioration, such as by using an aging prevention agent, but possible destroys in an interface between a compression rubber layer and core wires and in an interface between an adhesive rubber layer and core wires at high temperature are not well known. Accordingly, little studies were made to give long-term durability, taking into account this point of view.
In summary, the conventional power transmission belt has a problem in that it is difficult to improve long-term durability.

Patent Document 1: Official Gazette of Unexamined Japanese Patent Application Publication No. Hei-5-272595
Patent Document 2: Official Gazette of Unexamined Japanese Patent Application Publication No. Hei-9-144815
Patent Document 3: Official Gazette of Examined Japanese Patent Application Publication No. Sho-63-28788
Patent Document 4: Official Gazette of Examined U.M. Application Publication No. Hei-1-10513
Patent Document 5: Official Gazette of Unexamined Japanese Patent Application Publication No. Sho-57-204351

### SUMMARY OF THE INVENTION

### Problems to be Solved by the Invention

According to the present invention, it is an object of the present invention to improve the long-term durability of a power transmission belt.

### Means of Solving the Problems

The present inventors found that a difference in the long-term durability of the power transmission belt is caused even in a case where adhesive layers are respectively formed with the same hardness by using different rubber compositions, and hence made intensive studies on this. As a result, the present inventors found that the long-term durability of the power transmission belt can be improved by forming a rubber layer, which is adhered to core wires, to possess a certain solid state at high temperature, and thus achieved the present invention.

Specifically, according to the present invention, there is provided a power transmission belt comprising a rubber layer that is formed of a cross-linked rubber composition and extends in a belt lengthwise direction, and core wires that are adhered to the rubber layer and embedded therein in the belt lengthwise direction, wherein the rubber layer with the core wires embedded therein is formed to have a tensile stress of 1.1 to 1.7 MPa when the rubber layer is stretched in the belt lengthwise direction by 10% at 125°C.

By the tensile stress when stretched in the belt lengthwise direction by 10% is meant herein a value (MPa=N/mm²) that can be determined by measuring a load (N) applied to a specimen when it is stretched by 10% in a tensile test carried out in the belt lengthwise direction at a tensile rate of 6 inches/min under the condition of an atmospheric temperature of 125°C, following ASTM-D412, and dividing this load by an initial sectional area (mm²) of the specimen.

### Advantages of the Invention

A portion with a large strain dependence has a large hysteresis, too, and a portion, which is greatly deformed when in operation of the power transmission belt, has a lowered elasticity. According to the present invention, even when the power transmission belt during its operation reaches a high temperature of around 125°C, the strain dependence of the rubber layer with the core wires adhered thereto and embedded therein is reduced, so that the lowering of the elasticity can be inhibited, and the stress concentration in an interface between the rubber layer in which the lowering of the elasticity has been inhibited, and the core wires, can be inhibited. Therefore, it is possible to improve the long-term durability of the power transmission belt.

### Brief Description of the Drawings

FIG. 1 is a cross sectional view taken in a transverse direction of a power transmission belt (V-ribbed belt) of a first embodiment.
FIG. 2 is a cross sectional view taken in a transverse direction of a power transmission belt (V-belt) of a second embodiment.
FIG. 3 is a cross sectional view taken in a transverse direction of a power transmission belt (V-belt) of a third embodiment.
FIG. 4 is a schematic view illustrating a belt-running test method.

### Description of the Reference Codes

1a: V-ribbed belt
1b, 1c: V-belt
2a, 2b, 2c: rubberized canvas layer
3a, 3c: adhesive rubber layer
4a, 4b, 4c: core wires
5a, 5b, 5c: compression rubber layer

### Best Mode for Carrying out the Invention

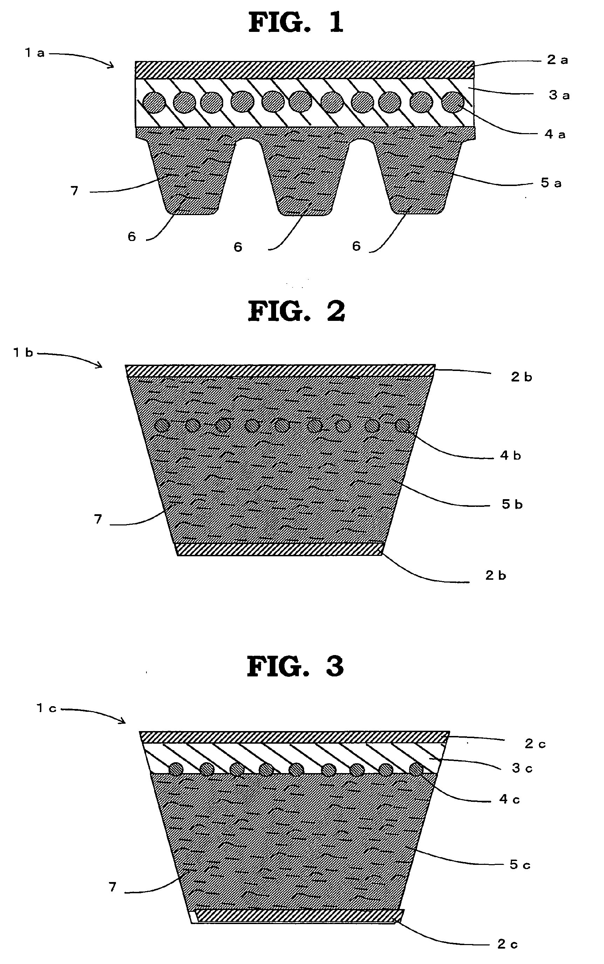

Now, the description will be made for a first embodiment of the present invention by taking, for example, a V-ribbed belt illustrated in FIG. 1.

### (First Embodiment)

A V-ribbed belt 1a of this embodiment is formed into an endless belt, and has a compression rubber layer 5a extending in the belt-lengthwise direction (circumferential direction) and an adhesive rubber layer 3a whose rubber layer is laminated on the compression rubber layer 5a in a thicknesswise direction. An inner side of the V-ribbed belt 1a, which side acting as a power transmission side, is provided with the compression rubber layer 5a formed by the use of a rubber composition. This compression rubber layer 5a has a flatly formed outer side and an inner side formed with ribs 6 extending in the circumferential direction and located adjacent to each other in the transverse direction. The compression rubber layer 5a is provided on its outer side with an adhesive rubber layer 3a formed by the use of a rubber composition and adhered to the compression rubber layer 5a, and the adhesive rubber layer 3a is provided on its outer side with a rubberized canvas layer 2a acting as an outermost layer. The adhesive rubber layer 3a has plural core wires 4a located adjacent to each other in the transverse direction of the V-ribbed belt 1a at a given interval and extending in the circumferential direction.

The rubberized canvas layer 2a may be formed by the use of a rubber-coated canvas, which is used for a conventional power transmission belt.

The adhesive rubber layer 3a is formed of a cross-linked rubber composition. This adhesive rubber layer 3a is formed to have a tensile stress of 1.1 to 1.7 MPa when it is stretched in the belt lengthwise direction by 10% at 125°C.
The formation of the adhesive rubber layer 3a having a tensile stress of 1.1 to 1.7 MPa when it is stretched in the belt lengthwise direction by 10% at 125°C is realized, for example, by carrying out a method of forming the adhesive rubber layer 3a using a rubber composition having a reinforcing component and a cross-linking agent mixed in rubber.

Examples of rubber for use in the rubber composition of this adhesive rubber layer 3a include natural rubber, chloroprene rubber, alkylchloro sulfonated polyethylene, acrylonitrile butadiene rubber or its hydrogenerated rubber, styrene butadiene rubber, butadiene rubber and ethylene-α-olefin elastomer. As this ethylene-α-olefin elastomer, it is possible to use ethylene-α-olefin copolymer rubber, ethylene-α-olefin-diene copolymer rubber, rubber formed of a copolymer comprising an α-olefin other than ethylene and ethylene or a copolymer comprising an α-olefin other than ethylene and ethylene-diene (unconjugated diene), or a partially halogen substituted product thereof.
These rubbers may be used solely or in mixture of plural kinds. As a base rubber, it is preferable to use ethylene-α-olefin elastomer because it is excellent in heat resistance and cold resistance and is capable of giving long-term durability to the V-ribbed belt 1a. As this α-olefin, it is preferable to use one kind selected from among propylene, butene, hexane and octene. When a partially halogen substituted product is used-as this ethylene-α-olefin elastomer, it is especially preferable to use a partially chlorine substituted product. The mixture of two or more kinds of partially chlorine substituted products may be used.
Of them, it is preferable to use an ethylene-α-olefin-diene copolymer rubber, since it exhibits excellent heat resistance and cold resistance.
By the base rubber is herein meant rubber that is used for 50% or more by weight of the rubber component.

As examples of a reinforcing component for use in the rubber composition of this adhesive rubber layer 3a, it can be cited organic reinforcing agent, carbon black, silica, nylon short fiber, polyester short fiber, glass fiber and ceramic fiber. Of them, the use of organic reinforcing agent makes it possible to improve adhesive power to the core wires, and hence further improve the long-term durability of the V-ribbed belt 1a by inhibiting the adhesive rubber layer 3a from being peeled away from the core wires 4a in the interface therebetween.

As the organic reinforcing agent for use in the rubber composition of this adhesive rubber layer 3a, it is possible to use at least one kind selected from the group consisting of phenol resin, high-styrene resin, coumaroneindene resin, amino resin, vinyltoluene resin, lignin resin, butyl-phenol-acetylene resin and xylene formaldehyde resin.
Examples of the phenol resin include thermosetting resins such as phenol formaldehyde resin and modified phenol formaldehyde resin, and thermoplastic phenol resins.
An example of the high-styrene resin includes a styrene-butadiene copolymer resin. An example of the coumaroneindene resin includes an indene-styrene-coumarone copolymer resin.
Examples of the amino resin include melamine resin, urea resin, guanamine resin, aniline resin, sulfoamide resin and their modified products.
In addition, it is possible to use vinyltoluene resin, lignin resin, butyl-phenol-acetylene resin, xylene formaldehyde resin, epoxy resin, etc.

Of them, it is preferable to use thermosetting phenol resin or melamine resin as the organic reinforcing agent contained in a rubber composition for use in this adhesive rubber layer 3a, because it is possible to further improve the adhesive power to the core wires 4a, and more significantly improve an effect of inhibiting the peeling-off of the adhesive rubber layer 3a from the core wires 4a in the interface therebetween and hence improving the long-term durability of the V-ribbed belt 1a.
Furthermore, even if the thermosetting phenol resin is modified in the same manner as cashew lacquer and urushiol, or in a similar manner, or modified with drying oil or alkyls, it can produce an excellent advantage in the same manner as those not modified.

A commercially available thermosetting phenol resin may be used. AS examples thereof, it can be cited those commercially available from Sumitomo Bakelite Co., Ltd. under the trade names of "Sumiliteresin PR-13355", "Sumiliteresin PR-12687", "Sumiliteresin PR-7031A" and "Sumiliteresin PR-13349", those commercially available from Bayer AG under the trade names of "Vulkadur A" and "Vulkadur R3", and those commercially available from S&S JAPAN Co., Ltd. under the tradename of "Koreforte 5211", and those commercially available from Arakawa Chemical Industries, Ltd. under the trade name of "TAMANOL 100S".
As an example of the melamine resin, it can be cited "NIKARESIN NL" commercially available from Nippon Carbite Industry Co., Ltd.

A commercially available melamine resin is usually given formaldehyde, but some of those exemplified above as the thermosetting phenol resin may not contain a hardener. When using those containing no hardener, it is preferable to add a hardener by the amount equivalent to 10% of the contained phenol. It is preferable to use formaldehyde as this hardener. Given the mixture in relation to the rubber composition, addition of those having a similar hardening action, such as hexamethylenetetramine, is advantageous rather than addition of formaldehyde itself, from the working environmental point of view.

The organic reinforcing agent for use in this adhesive rubber layer 3a is preferably contained in a rubber composition of the adhesive rubber layer 3a in the amount of from 0.5 to 20 parts by weight relative to 100 parts by weight of polymer component. Since this organic reinforcing agent, as mentioned above, improves abrasive resistance and flexibility, as well as hardening the rubber, 0.5 to 20% by weight thereof is mixed, so that it is possible to allow the adhesive rubber layer 3a to have a high rubber elasticity, while having excellent abrasive resistance and flexibility.

As the cross-linking agent, sulfur, an organic peroxide or the like can be used. Using sulfur is preferable rather than using an organic peroxide because it can improve tearing strength or the like and improve the adhesiveness between the adhesive rubber layer 3a and the compression rubber layer 5a or between the adhesive rubber layer 3a and the core wires 4a.

Examples of the organic peroxide include, without limitation to a specific kind, dicumylperoxide (hereinafter referred also to "DCP"), di-t-butylperoxide, benzoylperoxide, 2,5-dimethyl-2,5-di(t-buthylperoxy)hexane, t-butylperoxycumen and t-butylbenzoylperoxide. They can be used alone or in combination with each other.

It is possible to mix, in addition to the components mentioned above, rubber compounding agents generally used in a rubber industry, such as other reinforcing components, fillers such as calcium carbonate and talc, plasticizers, stabilizers, processing materials and colorants into the rubber composition for use in the adhesive rubber layer 3a, to such an extent as not to impair the advantages of the present invention.

As the core wires 4a adhered to and embedded in the adhesive rubber layer 3a, it is possible to use polyester, such as polyethylene terephthalate and polyethylene naphthalate, nylon, aramid, vinylon, glass fiber, steel cord and the like, and it is possible to use the core wires 4a that have been subjected to a resorcin-formalin-latex treatment (hereinafter referred also to "RFL treatment"), or an adhesive treatment by a solvent type adhesive.

In this RFL treatment, it is possible to use an RFL treating solution prepared by condensing resorcin and formalin at a mole ratio of 1/3 to 3/1 (resorcin/formalin) in the presence of a basic catalyst, thereby preparing a resorcin-formalin resin (resorcin-formalin primary condensate, hereafter referred to "RF"), dispersing this RF in water with a concentration in a range from 5% to 80% by weight, and mixing latex thereinto.
The solid content of an RFL treating solution for use in the RFL treatment of the core wires 4a is generally in a range of from 10 to 30% by weight without limitation.
As the latex, it is possible to use solely or in mixture of plural kinds, a latex containing as a polymer component chlorosulfonated polyethylene or alkylated chlorosulfonated polyethylene, a latex containing pyridine or carboxyl groups, such as a carboxyl modified vinylpyridine latex and a vinylpyridine latex, a latex containing chlorine groups, such as a chloroprene (CR) latex and a 2,3-dichlorobutadiene (2,3 DCB) latex, a latex containing nitrile groups, such as a carboxyl-group-containing hydrogenerated NBR latex, and a latex having phenyl groups at side chains, such as a styrene-butadiene copolymeric (SBR) latex. It is possible to carry out an RFL treatment several times for core wires by using different RFL treating solutions, according to needs and circumstances.
It is preferable that this RFL treating solution contains RF and latex at a weight ratio of 1/2 to 1/10 (RF/latex).

Especially, also when using a hardly adhesive ethylene-α-olefin-diene rubber as a base rubber of a rubber composition of the adhesive rubber layer 3a, in order to give stabilized adhesiveness to the core wires 4a for the adhesive rubber layer 3a, the core wires 4a are preferably subjected to an RFL treatment by an RFL treating solution using a latex that contains as a polymer component any one of a homopolymer that contains as a repeating unit chlorosulfonated ethylene or alkylsulfonated ethylene, such as chlorosulfonated polyethylene or alkylated chlorosulfonated polyethylene, a homopolymer that contains as a repeating unit a modified product of chlorosulfonated ethylene or alkylsulfonated ethylene, a copolymer that contains as a repeating unit chlorosulfonated ethylene, alkylsulfonated ethylene and modified products thereof and that uses plural kinds of these repeating units, and a copolymer that contains one or more kinds of these repeating units and a different repeating unit.

In a case where the core wires 4a are subjected to the adhesive treatment by a solvent type adhesive, a commercially available solvent type adhesive may be used.

The compression rubber layer 5a is formed of a cross-linked rubber composition, and contains short fibers 7 oriented in the transverse direction of the V-ribbed belt 1a. For the rubber composition for use in forming this compression rubber layer 5a, it is possible to use, for example, a rubber composition that mixes in rubber a reinforcing component, such as an organic reinforcing agent and carbon black and a cross-linking agent, as well as the short fibers 7.

For a rubber composition for use in forming this compression rubber layer 5a, it is possible to use, as a base rubber, natural rubber, styrene-butadiene copolymer rubber, chloroprene rubber, hydrogenated nitrile-butadiene rubber, alkylated chlorosulfonated polyethylene, isoprene rubber, epichlorhydrin rubber, butyl rubber, acryl rubber, ethylene-α-olefin elastomer and the like solely or in mixture of plural kinds. Ethylene-α-olefin elastomer is preferably used as the base rubber since it enables the rubber composition to have excellent heat resistance.
As this ethylene-α-olefin elastomer, it is possible to use, such as an ethylene-propylene copolymer rubber, an ethylene-1-butene copolymer rubber, an ethylene-1-octene copolymer rubber, and copolymer rubbers with these copolymers copolymerized with dienes.
By the base rubber is herein meant rubber that is used for 50% or more by weight of the rubber component.

As the short fibers 7 for use in the rubber composition of the compression rubber layer 5a, it is possible to use polyester fibers, polyvinyl alcohol fibers, polyamide fibers, cotton fibers, silk fibers, linen fibers, wool fibers, cellulose fibers, aromatic polyamide fibers, wholly aromatic polyester fibers, polyparaphenylene benz-bis-oxazole fibers, carbon fibers, polyketone fibers, basalt fibers and the like.

As the organic reinforcing agent for use in the rubber composition, it is possible to use the same organic reinforcing agent as those exemplified for the adhesive rubber layer 3a. That is, it is possible to use at least one kind selected from the group consisting of phenol resin, high-styrene resin, coumaroneindene resin, amino resin, vinyltoluene resin, lignin resin, butyl-phenol-acetylene resin and xylene formaldehyde resin.
As the phenol resin, it is possible to use thermosetting phenol resins, such as phenol formaldehyde resin and modified phenol formaldehyde resin, and thermoplastic phenol resins. As the high-styrene resin, it is possible to use a styrene-butadiene copolymer resin. As the coumaroneindene resin, it is possible to use an indene-styrene-coumarone copolymer resin. As the amino resin, it is possible to use melamine resin, urea resin, guanamine resin, aniline resin, sulfoamide resin and modified products thereof. In addition, it is possible to use vinyltoluene resin, lignin resin, butyl-phenol-acetylene resin, xylene formaldehyde resin, epoxy resin, etc., in the same manner as in the case in which they are used for the adhesive rubber layer 3a.

As the organic reinforcing agent for use in the compression rubber layer 5a, a thermosetting phenol resin is appropriate because it can enhance stretchability while improving the hardness and initial modulus, of the rubber composition with the thermosetting phenol resin mixed thereinto.
Furthermore, as this thermosetting phenol resin, cashew lacquer, urushiol, a resin modified in the same manner as these resins, and a resin modified with drying oil or alkyls may be used. The conditions are the same as those for the adhesive rubber layer 3a, in that various modified products can be used for this thermosetting phenol resin, and hexamethylenetetramine is preferable when a hardener is used.

It is preferable to mix 0.5 to 20% by weight of the organic reinforcing agent in the rubber composition for use in forming the compression rubber layer 5a, because this mixing can give excellent abrasion resistance and flexibility to the compression rubber layer 5a. This organic reinforcing agent can improve the abrasion resistance and the flexibility while hardening rubber, as mentioned above, and therefore it is possible to enable the compression rubber layer 5a to have excellent abrasion resistance and flexibility while having high rubber elasticity by being contained in the amount of 0.5 to 20% by weight.

As the carbon black, as long as it is generally used for power transmission belts, no limitation is intended. For example, it is possible to use carbon black called such as furnace black, channel black, thermal black or acetylene black.

As the cross-linking agent, sulfur, an organic peroxide or the like can be used. When using sulfur as this cross-linking agent, it is preferable to use vulcanization accelerators, such as thiuram, sulfonamide, thiazole and dithiocarbamate solely or in combination with each other. The amount of sulfur to be mixed is preferably from 0.5 to 3.0 parts relative to 100 parts by weight of rubber, and the total amount of the vulcanization accelerators to be mixed is preferably from 0.5 to 5.0 parts relative to 100 parts by weight of rubber.
As the organic peroxide, it is possible to use, without limitation to a specific kind, for example, dicumyl peroxide (hereinafter referred to "DCP"), di-t-butylperoxide, benzoylperoxide, 2,5-dimethyl-2,5-di(t-buthylperoxy)hexane, t-butylperoxycumen, t-butylbenzoylperoxide, and the like solely or in combination with each other. The amount of this organic peroxide to be mixed is preferably from 0.2 to 10 parts relative to 100 parts by weight of rubber.

It is possible to mix, in addition to the components mentioned above, rubber compounding agents generally used in a rubber industry, such as other reinforcing components, fillers such as calcium carbonate and talc, plasticizers, stabilizers, processing materials and colorants into the rubber composition for use in forming the compression rubber layer 5a, to such an extent as not to impair the advantages of the present invention.

Now, the description will be made for a method of manufacturing the V-ribbed belt 1a by those materials.
First, in manufacturing the V-ribbed belt 1a, an unvulcanized rubber sheet for preparing the adhesive rubber layer 3a and the compression rubber layer 5a, and RFL treated core wires are used.

The unvulcanized rubber sheet for the adhesive rubber layer 3a and the compression rubber layer 5a may be prepared by kneading the materials contained in the rubber composition by using a kneading means, such as a generally used kneading roll, kneader or mixer, and then forming it into a sheet. In the sheet forming, it is possible to orient the short fibers 7 or the like contained in the rubber composition by using a calender roll or the like.
When a thermosetting phenol resin is used as the organic reinforcing agent, it is preferable to carry out kneading allowing the temperature of the rubber composition to be from 90 to 130°C in the kneading.
By setting the kneading temperature at 90 to 130°C when a thermosetting phenol resin is used as the organic reinforcing agent, it is possible to restrain excessive progress of cross-linking of rubber while satisfactorily dispersing the thermosetting phenol resin in the rubber composition.
When a melamine resin is used as the organic reinforcing agent, it is possible to carry out kneading while having a temperature of the rubber composition being around 70°C in the kneading.

In the RFL treatment of the core wires 4a, the untreated core wires 4a are immersed in a tank with an RFL treating solution stored therein, and then subjected to a squeezing treatment, and then passed through a furnace that has been heated to a given baking temperature. This immersing and baking may be carried out plural times according to needs and circumstances.
When the immersing and baking are carried out plural times, different RFL treating solutions may be used respectively in one immersing operation and another immersing operation, or the RFL treatment may be carried out by having different furnace temperatures respectively set for one baking operation and another baking operation.
A pretreatment may be carried out prior to this RFL treatment.

The V-ribbed belt 1a to be manufactured by using the unvulcanized rubber sheet of the adhesive rubber layer 3a and the compression rubber layer 5a, the RFL treated core wires 4a and a rubberized canvas can be manufactured, following a conventional method. For example, a rubber-coated canvas of a single or plural layers is wound around a cylindrical molding drum having a smooth surface; the core wires 4a are then spirally spun around it with the unvulcanized rubber sheet wound therearound; the unvulcanized rubber sheet for the adhesive rubber layer 3a is then wound therearound; and the unvulcanized rubber sheet for the compression rubber layer 5a is then wound therearound. Thus, an unvulcanized laminate is prepared.
For the above, it is not necessary to use an unvulcanized rubber sheet, which has a tensile stress of 1.1 to 1.7 MPa when it is stretched in the belt lengthwise direction by 10% at 125°C after cross-linking, for the unvulcanized rubber sheet for the adhesive rubber layer 3a to be wound around the cylindrical molding drum prior to the spinning of the core wires 4a or the unvulcanized rubber sheet for the adhesive rubber layer 3a on the side of the rubberized canvas layer 2a. Instead, it is possible to form the adhesive rubber layer 3a, which is adhered to the compression rubber layer 5a and to which the core wires 4a are adhered, to have a tensile stress of 1.1 to 1.7 MPa when it is stretched in the belt lengthwise direction by 10% at 125°C, by using an unvulcanized rubber sheet, which is capable of forming the adhesive rubber layer 3a allowing the same to have a tensile stress of 1.1 to 1.7 MPa when it is stretched in the belt lengthwise direction by 10% at 125°C, only for the unvulcanized rubber sheet for the adhesive rubber layer 3a to be wound around the cylindrical molding drum following the spinning of the core wires 4a, or only for the portion which is adhered to the compression rubber layer 5a and has the core wires 4a adhered thereto and embedded therein.

For the above, the unvulcanized sheet of the compression rubber layer 5a is laminated to have the short fibers 7 oriented in the transverse direction of the belt, so that the short fibers 7 of the compression rubber layer 5a of the formed V-ribbed belt 1a can be held oriented in the transverse direction of the V-ribbed belt 1a.

The thus formed laminate is integrated by, for example, being heated under pressure in a vulcanizing vessel to form an annular body. Then, this annular body is wound between a driving roll and a driven roll and then circumferentially moved; ribs 6 are formed on the surface by a grinding wheel or the like, and then the annular body is, for example, cut into pieces each having a given width. Thus, the V-ribbed belt 1a can be manufactured.

### (Second Embodiment)

Now, the description will be made for a second embodiment with reference to a V-belt 1b of FIG. 2.
The V-belt 1b of this second embodiment is formed into an endless belt, and has a compression rubber layer 5b formed in the belt lengthwise direction (circumferential direction), and forms no adhesive rubber layer unlike the first embodiment described above.
The compression rubber layer 5b has an inverted trapezoidal cross section having an outer side wider than an inner side. The V-belt 1b further has rubberized canvas layers 2b formed respectively on the inner side and the outer side, of the compression rubber layer 5b to have the compression rubber layer 5b held between the two rubberized canvas layers 2b on the outer and inner sides.
The V-belt 1b has core wires 4b that are disposed in a substantially thickness center of the compression rubber layer 5b and embedded therein. The core wires 4b are located at a given interval from each other in the width direction of the V-belt 1b, while extending substantially at the same position with respect to the thicknesswise direction, so that the plural core wires 4b are embedded in the V-belt 1b, extending in the circumferential direction thereof.

This embodiment is the same as the first embodiment in that the compression rubber layer 5b of the V-belt 1b is formed of a cross-linked rubber composition, and the same mixing materials as those of the first embodiment can be used in the rubber composition of the compression rubber layer 5b.
However, the compression rubber layer 5b of this V-belt 1b is formed with the rubber composition, which is cross-linked, to have a tensile stress of 1.1 to 1.7 MPa when it is stretched in the belt lengthwise direction by 10% at 125°C.

This compression rubber layer 5b having a tensile stress of 1.1 to 1.7 MPa when it is stretched in the belt lengthwise direction by 10% at 125°C can be formed by adjusting the mixing ratio of, such as, a reinforcing component and a cross-linking agent relative to rubber, as described in the first embodiment for forming the adhesive rubber layer. It is possible to form the compression rubber layer 5b to have a tensile stress of 1.1 to 1.7 MPa when it is stretched in the belt lengthwise direction by 10% at 125°C, by using, for example, ethylene-α-olefin-diene copolymer rubber as a base rubber or using a rubber composition containing a thermosetting phenol resin.

This embodiment is the same as the first embodiment with respect to the advantage in that excellent heat resistance can be produced by using, as a base rubber, ethylene-α-olefin elastomer, such as ethylene-α-olefin-diene copolymer rubber.
Also, this embodiment is the same as the first embodiment with respect to the advantage in that: it is possible to enhance stretchability while improving the hardness and initial modulus, of the compression rubber layer 5b by using, as an organic reinforcing agent, a thermosetting phenol resin; and various modified products can be used as this thermosetting phenol resin.

For a rubber-coated canvas of the rubberized canvas layer 2b and the core wires 4b, similar ones to those of the first embodiment can be used. This embodiment is the same as the first embodiment in that excellent adhesiveness to a rubber composition can be produced by using, as the core wires 4b, core wires that have been subjected to a resorcin-formalin-latex treatment using a latex that contains as a polymer component any one of a homopolymer that contains as a repeating unit chlorosulfonated ethylene, alkylsulfonated ethylene or a modified product thereof, a copolymer that contains plural kinds of those repeating units, and a copolymer that contains at least one kind of those repeating units and a different repeating unit.

The V-belt 1b can also be manufactured by the manufacturing method described in the first embodiment.
Specifically, the V-belt 1b can be manufactured by winding a rubberized canvas around the smoothly formed circumferential surface of a cylindrical molding drum, then winding an unvulcanized rubber sheet for the compression rubber layer 5b partially therearound, then spirally spinning the core wires 4b therearound, then winding an unvulcanized rubber sheet for the remaining compression rubber layer 5b therearound and then winding again a rubber-coated canvas therearound, thus preparing an unvulcanized laminate, and integrating the unvulcanized laminate into an annular body by heating the same under pressure in a vulcanizing vessel, then winding this annular body between a driving roll and a driven roll and moving the same in the circumferential direction, then forming V-shaped cutouts thereon by a grinding wheel or the like, and then cutting it into pieces respectively along the cutouts.

### (Third Embodiment)

Now, the description will be made for a third embodiment with reference to a V-belt 1c of FIG. 3.
The V-belt 1c of the third embodiment has an overall shape similar to that of the V-belt described in the second embodiment, and has the same structure as that of the V-ribbed belt described in the first embodiment, in that an adhesive rubber layer 3c and a compression rubber layer 5c extending in the belt lengthwise direction (circumferential direction) are laminated in the belt thicknesswise direction.
However, the V-belt 1c of the third embodiment is different from the first embodiment that has been described by taking for example the case where the core wires are embedded in the adhesive rubber layer, and the second embodiment that has been described by taking for example the case where the core wires are embedded in the compression rubber layer, since the core wires 4c are adhered to both the compression rubber layer 5c and the adhesive rubber layer 3c while being partially embedded in both the compression rubber layer 5c and the adhesive rubber layer 3c.

In the third embodiment, at least one of the adhesive rubber layer 3c and the compression rubber layer 5c are formed to have a tensile stress of 1.1 to 1.7 MPa when it is stretched in the belt lengthwise direction by 10% at 125°C.
The adhesive rubber layer or the compression rubber layer 5c having a tensile stress of 1.1 to 1.7 MPa when it is stretched in the belt lengthwise direction by 10% at 125°C can be formed by adjusting the mixing ratio of, such as a reinforcing component and a cross-linking agent relative to rubber, as described in the first and second embodiments.

As described in the first to third embodiments, there is formed a power transmission belt that has rubber layers formed of the cross-linked rubber composition, such as an adhesive rubber layer and a compression rubber layer and extending in the belt lengthwise direction, and core wires adhered to and embedded in the rubber layer in the belt lengthwise direction, in which the rubber layers with the core wires embedded therein are formed to have a tensile stress of 1.1 to 1.7 MPa when it is stretched in the belt lengthwise direction by 10% at 125°C. Thus, it is possible to reduce the strain dependence in operation of the power transmission belt and inhibit the lowering of the elasticity of the rubber layers. Accordingly, the stress concentration in an interface between the rubber layers in which the lowering of the elasticity has been inhibited, and the core wires, can be inhibited, thereby improving the long-term durability of the power transmission belt.

### EXAMPLES

Now, the detailed description will be made for the present invention with reference to Examples without intention to limit the present invention thereto.

### (Examples 1 to 9, Comparative Examples 1 and 2)

### (Rubber Composition for an Adhesive Rubber Layer)

As a rubber composition for use in forming an adhesive rubber layer, rubber compositions respectively having mixed compositions 1 to 9 shown in Table 1 relative to 100 parts by weight of ethylene-propylene rubber (made by The Dow Chemical Company under the trade name of "Nordel 4640"), and a rubber composition having a mixed composition 10 shown in Table 1 relative to 100 parts by weight of chloroprene rubber (made by Showa Denko K.K. under the trade name of "GRT") were prepared.

**[Table 1]**

| Mixed Ingredients | "Trade Name", Manufacturer | Comp. 1 | Comp. 2 | Comp. 3 | Comp. 4 | Comp. 5 | Comp. 6 | Comp. 7 | Comp. 8 | Comp. 9 | Comp. 10 |
|---|---|---|---|---|---|---|---|---|---|---|---|
| EPDM | "NORDEL 4640" made by Dow Chemical | 100 | 100 | 100 | 100 | 100 | 100 | 100 | 100 | 100 | - |
| Chloroprene | "GRT" made by Showa Denko | - | - | - | - | - | - | - | - | - | 100 |
| Phenol Resin | "SUMILITE RESIN PR12687" made by Sumitomo Bakelite | 3 | - | - | 0.5 | 5 | 3 | - | - | 25 | 3 |
| Modified Melamine Resin | "NIKARESIN NL "made by Nippon Carbite Industry | - | 3 | - | - | - | - | - | - | - | - |
| High-styrene Resin | "JSR0061" made by JSR | - | - | 3 | - | - | - | - | - | - | - |
| Carbon Black | "SEAST 3" made by Tokai Carbon | 45 | 45 | 45 | 45 | 45 | 45 | 60 | 45 | 15 | 45 |
| Silica | "TOKUSEAL GU" made by Tokuyama | 20 | 20 | 20 | 20 | 20 | 20 | 20 | 20 | 10 | 20 |
| Paraffinic Process Oil | "SUNPAR 2280" made by Sun Oil | 10 | 10 | 10 | 10 | 10 | 10 | 10 | 10 | 10 | - |
| Plasticizer | "DOS" made by Daihachi Chemical Industry | - | - | - | - | - | - | - | - | - | 8 |
| Stearic Acid | Bead stearic acid "TSUBAKI" made by NOF Corporation | 1 | 1 | 1 | 1 | 1 | 1 | 1 | 1 | 1 | 1 |
| Zink Oxide | "ZINC WHITE NO. 1" made by Sakai Chemical Industry | 5 | 5 | 5 | 5 | 5 | 5 | 5 | 5 | 5 | 5 |
| Magnesium Oxide | "KYOMAG 150" made by Kyowa Chemical Industry | - | - | - | - | - | - | - | - | - | 4 |
| Sulfur | "OIL SULFUR" made by Tsurumi Chemical Industry | 1 | 1 | 1 | 1 | 1 | - | 1 | 1 | 1 | - |
| Vulcanization Accelerator 1 | "TETRAETHYLTHIURAM DISULFIDE" made by Ouchi Shinko Chemical | 1 | 1 | 1 | 1 | 1 | - | 1 | 1 | 1 | - |
| Vulcanization Accelerator 2 | "N-OXY DIETHYLENE-BENZOTHIAZOL-2-SULFONAMIDE" by Ouchi Shinko Chemical | 1 | 1 | 1 | 1 | 1 | - | 1 | 1 | 1 | - |
| Organic Peroxide | "PERCUMYL D40" (DCP) by NOF Corporation | - | - | - | - | - | 7 | - | - | - | - |

| | | | | | | | | | | | |
|---|---|---|---|---|---|---|---|---|---|---|---|
| Numerical values in Table represents pars by weight. | | | | | | | | | | | |

### (Rubber Composition for Compression Rubber Layer)

For the rubber composition used in forming a compression rubber layer, rubber compositions having compositions of A and B shown in Table 2 were prepared by using 20 parts by weight of short fibers (made by 66 nylon, 6 denier diameter and 1 mm length) relative to 100 parts by weight of ethylene-propylene rubber (made by The Dow Chemical Company under the trade name of "Nordel 4640") by the compositions shown in Table 2, while a rubber composition having a composition C was prepared by using 20 parts by weight of short fibers (made by 66 nylon, 6 denier diameter and 1 mm length) relative to 100 parts by weight of chloroprene rubber (made by Showa Denko K.K. under the trade name of "GRT") by the composition shown in Table 2.

**[Table 2]**

| Blended Ingredients | "Trade Name", Manufacturer | Comp. A | Comp. B | Comp. B |
|---|---|---|---|---|
| EPDM | "NORDEL 4640" made by Dow Chemical | 100 | 100 | - |
| Chloroprene | "GRT" made by Showa Denko | - | - | 100 |
| Carbon Black | "SEAST 3" made by Tokai Carbon | 60 | 60 | 60 |
| Paraffinic Process Oil | "SUNPAR 2280" made by Sun Oil | 10 | 10 | 10 |
| Stearic Acid | Bead stearic acid "TSUBAKI" made by NOF Corporation | 1 | 1 | 1 |
| Zink Oxide | "ZINC WHITE NO. 1" made by Sakai Chemical Industry | 5 | 5 | 5 |
| Magnesium Oxide | "KYOMAG 150' made by Kyowa Chemical Industry | - | - | 4 |
| Nylon Short Fiber | "66 Nylon, 6 de. by 1 mm" made by Asahi Kasei | 20 | 20 | 20 |
| Organic Peroxide | "PERCUMYL D40" (DCP) made by NOF Corporation | - | 7 | 1 |
| Sulfur | "OIL SULFUR" made by Tsurumi Chemical Industry | 1 | - | - |
| Vulcanization Accelerator 1 | "TETRAETHYLTHIURAM DISULFIDE" made by Ouchi Shinko Chemical | 1 | - | - |
| Vulcanization Accelerator 2 | "N-OXY DIETHYLENE-BENZOTHIAZOL-2-SULFONAMIDE" made by Ouchi Shinko Chemical | 1 | - | - |

| | | | | |
|---|---|---|---|---|
| Numerical values in Table represents pars by weight. | | | | |

### (Core Wires-RFL Treatment)

For the core wires, polyester cords made by Teijin Limited (1000 deniers, /2 × 3, Final twist: 9.5T/10 cm(Z), Preliminary twist: 2.19T/10 cm) were used; and the polyester cords were dipped in a toluene solution of isocyanate (having an isocyanate solid content of 20% by weight), and heated and dried at a temperature of 240°C for 40 seconds to effect pretreatment of polyester cords. Then, the pretreated polyester cords were dipped in an RFL treating solution 1 mentioned below, and heated and dried at a temperature of 200°C for 80 seconds to prepare core wires X.
Core wires Y were prepared by using an RFL treating solution 2 mentioned below, in place of the RFL treating solution 1.
In manufacturing a power transmission belt, these core wires X and Y for use were dipped in an adhesive rubber-containing toluene solution (concentration: 10% by weight) that was prepared by dissolving by toluene the same composition as the adhesive rubber composition of a power transmission belt to be prepared, and dried at 60°C for 40 seconds.

### (RFL Treating Solution 1)

7.31 parts by weight of resorcin and 10.8 parts by weight (37% by weight) of formalin were mixed together, and sodium hydroxide aqueous solution (solid content: 0.33 parts by weight) was added thereto and stirred. Then, 170 parts by weight of water was added thereto and it was aged for 5 hours to prepare a resorcin-formalin resin (RF), and an aqueous solution having the ratio between resorcin and formalin (resorcin/formalin) equal to 0.5 was prepared.
Then, a chlorosulfonated polyethylene latex (solid content: 40%) was added to and mixed with this RF aqueous solution to have the RF/latex ratio equal to 0.25 (solid content: 45.2 parts by weight), and water was added to have a solid content concentration of 20%, then stirred while being aged for 12 hours. Thus, the RFL treating solution 1 was prepared.

### (RFL Treating Solution 2)

7.31 parts by weight of resorcin and 6.9 parts by weight (37% by weight) of formalin were mixed together, and 107 parts by weight of sodium hydroxide aqueous solution (solid content: 0.6 parts by weight) was added thereto and stirred. Then, it was aged for 2 hours to prepare a resorcin-formalin resin (RF), and an aqueous solution having the ratio between resorcin and formalin (resorcin/formalin) equal to 0.82 was prepared.
Then, 67 parts by weight of a 2,3-dichlorobutadiene latex (made by Tosoh Corporation under the trade name of "LH430", solid content: 32%) was added to the RF aqueous solution and aged for 6 hours. Thus, the RFL treating solution 2 was prepared.

### (Preparation of a Power Transmission Belt)

The rubber compositions respectively having the compositions (compositions 1 to 10, compositions A to C) were respectively kneaded by a Banbury mixer, and formed into sheets by a calender roll. Thus, unvulcanized sheets for adhesive rubber layers and compression rubber layers were prepared. V-ribbed belts of Examples 1 to 9 and Comparative Examples 1 to 2 were prepared in the manner mentioned below by using these unvulcanized sheets and core wires in combination shown in Table 3.

Arubber-coated canvas and an unvulcanized sheet for an adhesive rubber layer were wound around a cylindrical molding drum having a circumference of 1000 mm, then a core wire was spirally spun therearound, and then the unvulcanized sheet for an adhesive rubber layer and an unvulcanized sheet for a compression rubber layer were wound therearound. Thus, an unvulcanized laminate was prepared.
For the above, the unvulcanized sheet for a compression rubber layer and the unvulcanized sheet for a back-side rubber layer were wound around the cylindrical molding drum so as to allow the transverse direction of the power transmission belt to be a calender direction, and the unvulcanized sheet for an adhesive rubber layer was wound around the cylindrical molding drum so as to allow the lengthwise direction (circumferential direction) of the power transmission belt to be the calender direction. Thus, the unvulcanized laminate was prepared.
This unvulcanized laminate was vulcanized with steam in a vulcanizing vessel under an internal pressure of 6 kgf/cm² and an external pressure of 9 kgf/cm² at a temperature of 165°C for 35 minutes. Thus, a preform (cylindrical body) was prepared.
Then, plural ribs were formed on the surface of the cylindrical body by a grinding wheel, and then the cylindrical body was cut into pieces each having three ribs. Thus, a V-ribbed belt having a circumference of about 1000 mm was prepared.

### (Preparation of Specimens for Measuring Tensile Stresses and Tensile Stress Measurement)

The unvulcanized sheets for an adhesive rubber layer used in Examples and Comparative Examples each were laminated with a thickness of about 2.0 mm having each calender direction aligned in a given direction, and subjected to pressure vulcanization at 160°C for 35 minutes under a face pressure of 3920 kPa. Thus, 2.0 mm-thickness specimens respectively simulating the adhesive rubber layers of the V-ribbed belts of Examples and Comparative Examples were prepared.
The thus prepared sheet specimens were subjected to tensile tests in the calender direction, following ASTM-D412, in an atmosphere at 125°C and at a tensile rate of 6 inches/min, loads (N) that are being applied to the respective specimens when they have been stretched by 10% were measured, and each load was divided by an initial sectional area (mm²) of the corresponding specimen. Thus, the tensile stresses (MPa) were determined. The results are shown in Table 3.

**[Table 3]**

| | Adhesive Rubber Layers | | Compression rubber layers | Core Wires Used |
|---|---|---|---|---|
| | Compositions Used | Tensile Stresses (MPa) | Compositions Used | |
| Example 1 | 1 | 1.6 | A | X |
| Example 2 | 2 | 1.6 | A | X |
| Example 3 | 3 | 1.2 | A | X |
| Example 4 | 4 | 1.1 | A | X |
| Example 5 | 5 | 1.7 | A | X |
| Example 6 | 6 | 1.5 | A | X |
| Example 7 | 6 | 1.5 | B | X |
| Example 8 | 7 | 1.3 | A | X |
| Example 9 | 10 | 1.6 | C | Y |
| Comparative Example 1 | 8 | 1.0 | A | X |
| Comparative Example 2 | 9 | 1.8 | A | X |

### (Evaluation Test)

### (Physical Characteristics)

The evaluation of the physical characteristics was made for the compression rubber layers in the anti-calender direction and the adhesive rubber layers in the calender direction, which were formed by using the respective compositions. Specifically, the hardness was measured according to JIS K 6253, and the tensile strength and the elongation at break were measured according to JIS K 6251. The results are shown in Table 4.

**[Table 4]**

| Adhesive Rubber Layer | Comp. 1 | Comp. 2 | Comp. 3 | Comp. 4 | Comp. 5 | Comp. 6 | Comp. 7 | Comp. 8 | Comp. 9 | Comp. 10 |
|---|---|---|---|---|---|---|---|---|---|---|
| Hardness (JIS-A) | 91 | 90 | 89 | 83 | 96 | 91 | 85 | 81 | 97 | 92 |
| Tensile Strength (MPa) | 16.0 | 16.0 | 15.0 | 18.0 | 14.0 | 18.0 | 18.0 | 18.0 | 13.0 | 18.0 |
| Elongation at Break (%) | 370 | 370 | 320 | 350 | 320 | 370 | 300 | 350 | 320 | 320 |
| Compression Rubber Layer | Comp. A | Comp. B | Comp. C | | | | | | | |
| Hardness (JIS·A) | 86 | 85 | 87 | | | | | | | |
| Tensile Strength (MPa) | 9.0 | 10.0 | 10.0 | | | | | | | |
| Elongation at Break (%) | 270 | 250 | 250 | | | | | | | |

### (Belt Running Test)

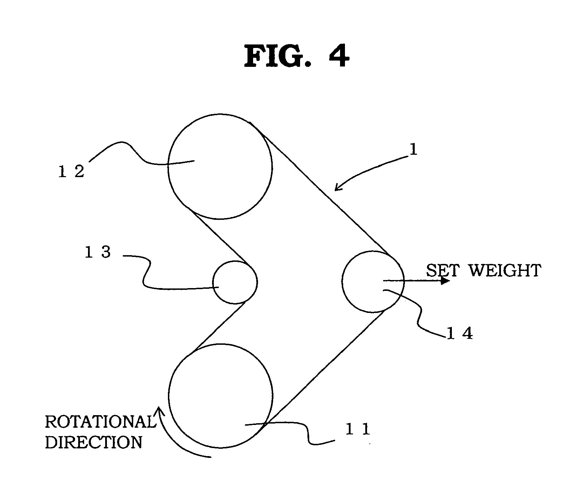

The belt running test was conducted for the thus fabricated V-ribbed belts in the manner shown in FIG. 4.
Each V-ribbed belt was wound between a driving pulley 11 (diameter: 120 mm) and a driven pulley 12 (diameter: 120 mm), and around an idler pulley 14 (diameter: 70 mm) and a tension pulley 13 (diameter: 45 mm), and the driving pulley was rotated at 4900 rpm with the load of the driven pulley being 16 horsepower and the set weight of the tension pulley 13 being 85 kgf.
This running test was conducted in an atmosphere at 130°C, and the time at which the core wires are exposed from the V-ribbed belt or the time at which cracks are caused in the compression rubber layer or the adhesive rubber layer, whichever earlier, was measured. The results are shown in Table 5.

### (Core Wire Adhesive Power Measurement)

The unvulcanized sheets for a compression rubber layer respectively used in Examples and Comparative Examples each were laminated with a thickness of about 5.0 mm, having each calender direction aligned in a given direction, and the unvulcanized sheets for an adhesive rubber layer each were laminated onto the unvulcanized sheet laminate for a compression rubber layer so as to have their calender directions oriented orthogonal to each other. At this moment, the unvulcanized sheets for an adhesive rubber layer were laminated with a thickness of about 2.0 mm, and plural core wires were disposed in a substantially thickness center of the laminate of the unvulcanized sheet for an adhesive rubber layer.
The core wires were disposed in parallel with each other at a given spacing, while having the lengthwise direction thereof to be the calender direction of the unvulcanized sheet for an adhesive rubber layer.
Each laminate having the unvulcanized sheet for a compression rubber layer, the unvulcanized sheet for an adhesive rubber layer and core wires disposed therein were subjected to pressure vulcanization at 160°C for 35 minutes under a face pressure of 3920 kPa, and thus specimens each having a thickness of about 7 mm for a core wire adhesive power measurement were prepared.
The each prepared specimen for core wire adhesive power measurement had an adhesive rubber layer facing upwards and three core wires adjacent to each other were pulled upwards away from an end of the specimen for core wire adhesive power measurement, and they were clamped by a tensile tester and a tensile test was conducted at a tensile rate of 100 mm/min, so that a stress when the three core wires have been simultaneously pulled away from the specimen at an angle of 90 degrees was measured, and the measurement was made with this stress being designated as a measurement of the core wire adhesive power. The results are shown in Table 5.

**[Table 5]**

| | Belt Running Test | | | Core Wire Adhesive Power (ksf/3 pieces) |
|---|---|---|---|---|
| | Operating Life | Test End Mode | Judgment | |
| Example 1 | 80 hrs or longer | - | ○ | 16.0 |
| Example 2 | 80 hrs or longer | - | ○ | 15.0 |
| Example 3 | 80 hrs or longer | - | ○ | 14.0 |
| Example 4 | 80 hrs or longer | - | ○ | 14.0 |
| Example 5 | 80 hrs or longer | - | ○ | 16.0 |
| Example 6 | 40 hrs | Ended due to pop-out of core wires | ○ | 12.0 |
| Example 7 | 40 hrs | Ended due to pop-out of core wires | ○ | 12.0 |
| Example 8 | 60 hrs | Ended due to pop-out of core wires | ○ | 13.0 |
| Example 9 | 80 hrs or longer | - | ○ | 16.0 |
| Comparative Example 1 | 15 hrs | Ended due to pop-out of core wires | × | 15.0 |
| Comparative Example 2 | 10 hrs | Ended due to pop-out of core wires | × | 13.0 |

| | | | | |
|---|---|---|---|---|
| *In "Comparative Example 2", cracks of the adhesive rubber layer, as well as the pop-out of the core wires were observed. | | | | |

From the results of Table 5, it can be seen that a power transmission belt that is characterized by including a rubber layer formed of a cross-linked rubber composition and extending in a belt lengthwise direction, and core wires adhered to the rubber layer and embedded therein in the belt lengthwise direction, wherein the rubber layer with the core wires embedded therein is formed to have a tensile stress of 1.1 to 1.7 MPa when it is stretched in the belt lengthwise direction by 10% at 125°C, has an improved long-term durability.

### (Examples 10 to 18, and Comparative Examples 3 and 4)

### (Fabrication of a Power Transmission Belt)

V-ribbed belts were manufactured by the combinations shown in Table 6 in the same manner as Examples 1 to 9, and Comparative Examples 1 and 2, except that core wires were disposed not in an adhesive rubber layer, but in an interface between an adhesive rubber layer and a compression rubber layer.
Specifically, all of a rubber-coated canvas and an unvulcanized sheet for an adhesive rubber layer were wound around a cylindrical molding drum having a circumference of 1000 mm and then a core wire was spirally spun therearound, and then an unvulcanized sheet for a compression rubber layer was wound therearound, thereby preparing an unvulcanized laminate, which was vulcanized in a vulcanizing vessel, and ribs were formed and the laminate was cut into a V-ribbed belt having a circumference of about 1000 mm.
The same composition as the rubber composition for an adhesive rubber layer was dissolved by toluene to prepare a toluene solution, and core wires were dipped therein and dried, in the same manner as Examples 1 to 9 and Comparative Examples 1 and 2.
Specimens for measurement of tensile stresses were prepared in the same manner as those shown in Table 3 in Examples 1 to 9 and Comparative Examples 1 and 2, and the results of the tensile stress measurement are shown in Table 6.

**[Table 6]**

| | Adhesive Rubber Layers | | Compression rubber layers | Core Wires Used |
|---|---|---|---|---|
| | Compositions Used | Tensile Stresses (MPa) | Compositions Used | |
| Example 10 | 1 | 1.6 | A | X |
| Example 11 | 2 | 1.6 | A | X |
| Example 12 | 3 | 1.2 | A | X |
| Example 13 | 4 | 1.1 | A | X |
| Example 14 | 5 | 1.7 | A | X |
| Example 15 | 6 | 1.5 | A | X |
| Example 16 | 6 | 1.5 | B | X |
| Example 17 | 7 | 1.3 | A | X |
| Example 18 | 10 | 1.6 | C | Y |
| Comparative Example 3 | 8 | 1.0 | A | X |
| Comparative Example 4 | 9 | 1.8 | A | X |

### (Evaluation Test)

### (Belt Running Test)

The results of the belt running test of the V-ribbed belts of Examples 10 to 18, and Comparative Examples 3 and 4 are shown in Table 7.

**[Table 7]**

| | Belt Running Test | | |
|---|---|---|---|
| | Operating Life | Test End Mode | Judgment |
| Example 10 | 80 hrs or longer | - | ○ |
| Example 11 | 80 hrs or longer | - | ○ |
| Example 12 | 80 hrs or longer | - | ○ |
| Example 13 | 80 hrs or longer | - | ○ |
| Example 14 | 80 hrs or longer | - | ○ |
| Example 15 | 40 hrs | Ended due to pop-out of core wires | ○ |
| Example 16 | 40 hrs | Ended due to pop-out of core wires | ○ |
| Example 17 | 60 hrs | Ended due to pop-out of core wires | ○ |
| Example 18 | 80 hrs or longer | - | ○ |
| Comparative Example 3 | 12 hrs | Ended due to pop-out of core wires | × |
| Comparative Example 4 | 18 hrs | Ended due to pop-out of core wires | × |

| | | | |
|---|---|---|---|
| *In "Comparative Example 4", cracks of the adhesive rubber layer, as well as the pop-out of the core wires were observed. | | | |

From the results of Table 7, it can also be seen that a power transmission belt that is characterized by including a rubber layer formed of a cross-linked rubber composition and extending in a belt lengthwise direction, and core wires adhered to the rubber layer and embedded therein in the belt lengthwise direction, wherein the rubber layer with the core wires embedded therein is formed to have a tensile stress of 1.1 to 1.7 MPa when it is stretched in the belt lengthwise direction by 10% at 125°C, has an improved long-term durability.

### (Examples 19 to 27, and Comparative Examples 5 and 6)

### (Fabrication of a Power Transmission Belt)

V-ribbed belts were manufactured with the core wires disposed in an interface between the adhesive rubber layer and the compression rubber layer, in the same manner as the aforesaid Examples 10 to 18 and Comparative Examples 3 and 4, except that unvulcanized sheets, in which rubber compositions for an adhesive rubber layer having the compositions shown in Table 8 and the aforesaid composition 8, and a rubber composition for a compression rubber layer having the compositions shown in Table 9 are used, are used in combination as shown in Table 10.
A toluene solution was prepared by dissolving the same composition as the rubber composition for an adhesive rubber layer by toluene, and core wires were dipped therein and dried in the same manner as in Examples 10 to 18 and Comparative Examples 3 and 4.
Specimens for measuring tensile stresses were prepared in the same manner as shown in Table 3 of Examples 1 to 9 and Comparative Examples 1 and 2. The results of the tensile stress measurement are shown in Table 10.

**[Table 8]**

| Mixed Ingredients | "Trade Name", Manufacturer | Comp. 11 | Comp. 12 |
|---|---|---|---|
| EPDM | "NORDEL 4640" made by Dow Chemical | 100 | - |
| Chloroprene | "GRT" made by Show a Denko | - | 100 |
| Carbon Black | "SEAST 3" made by Tokai Carbon | 45 | 45 |
| Silica | "TOKUSEALI GU" made by Tokuyama | 20 | 20 |
| Paraffinic Process Oil | "SUNPAR 2280" made by Sun Oil | 10 | - |
| Plasticizer | "DOS" made by Daihachi Chemical Industry | - | 8 |
| Stearic Acid | Bead stearic acid "TSUBAKIi" by NOF Corporation | 1 | 1 |
| Zink Oxide | "ZINC WHITE NO. 1" made by Sakai Chemical Industry | 5 | 5 |
| Magnesium Oxide | "KYOMAG 150" made by Kyowa Chemical Industry | - | 4 |
| Organic Peroxide | "PERCUMYL D40" (DCP) made by NOF Corporation | 7 | - |

[Table 9]

| Mixed Ingredients | "Trade Name", Manufacturer | Comp. D | Comp. E | Comp. F | Comp. G | Comp. H | Comp. I | Comp. J | Comp. K | Comp. L | Comp. M |
|---|---|---|---|---|---|---|---|---|---|---|---|
| EPDM | "NORDEL 4640" made by Dow Chemical | 100 | 100 | 100 | 100 | 100 | 100 | 100 | 100 | 100 | - |
| Chloroprene | "GRT" made by Showa Denko | - | - | - | - | - | - | - | - | - | 100 |
| Phenol Resin | "SUMILITE RESIN PR12687" made by Sumitomo Bakelite | 3 | - | - | 0.5 | 5 | 3 | - | - | 25 | 3 |
| Modified Melamine Resin | "NIKARESIN NL" made by Nippon Carbite Industry | - | 3 | - | - | - | - | - | - | - | - |
| High-styrene Resin | "JSR0061" made by JSR | - | - | 3 | - | - | - | - | - | - | - |
| Carbon Black | "SEAST 3" made by Tokai Carbon | 35 | 35 | 35 | 35 | 35 | 35 | 50 | 35 | 10 | 45 |
| Silica | "TOKUSEAL GU" made by Tokuyama | 20 | 20 | 20 | 20 | 20 | 20 | 20 | 20 | 10 | 20 |
| Paraffinic Process Oil | "SUNPAR 2280" made by Sun Oil | 10 | 10 | 10 | 10 | 10 | 10 | 10 | 10 | 12 | - |
| Plasticizer | "DOS" made by Daihachi Chemical Industry | - | - | - | - | - | - | - | - | - | 8 |
| Stearic Acid | Bead stearic acid "TSUBAKI" made by NOF Corporation | 1 | 1 | 1 | 1 | 1 | 1 | 1 | 1 | 1 | 1 |
| Zink Oxide | "ZINC WHITE NO. 1" made by Sakai Chemical Industry | 5 | 5 | 5 | 5 | 5 | 5 | 5 | 5 | 5 | 5 |
| Magnesium Oxide | "KYOMAG 150" made by Kyowa Chemical Industry | - | - | - | - | - | - | - | - | - | 4 |
| Nylon Short Fiber | "66 Nylon, 6 de. by 1 mm" made by Asahi Kasei | 20 | 20 | 20 | 20 | 20 | 20 | 20 | 20 | 20 | 20 |
| Sulfur | "OIL SULFUR" made by Tsurumi Chemical Industry | 1 | 1 | 1 | 1 | 1 | - | 1 | 1 | 1 | - |
| Vulcanization Accelerator 1 | "TETRAETHYLTHIURAM DISULFIDE" made by Ouchi Shinko Chemical | 1 | 1 | 1 | 1 | 1 | - | 1 | 1 | 1 | - |
| Vulcanization Accelerator 2 | "N·OXY DIETHYLENE-BENZOTHIAZOL-2-SULFONAMIDE" made by Ouchi Shinko Chemical | 1 | 1 | 1 | 1 | 1 | - | 1 | 1 | 1 | - |
| Organic Peroxide | "PERCUMYL D40" (DCP) made by NOF Corporation | - | - | - | - | - | 7 | - | - | - | - |

| | | | | | | | | | | | |
|---|---|---|---|---|---|---|---|---|---|---|---|
| Numerical values in Table represents pars by weight. | | | | | | | | | | | |

**[Table 10]**

| | Adhesive Rubber Layers | | Compression rubber layers | | Core Wires Used |
|---|---|---|---|---|---|
| | Compositions Used | Tensile Stresses (MPa) | Compositions Used | Tensile Stresses (MPa) | |
| Example 19 | 8 | 1.0 | D | 1.6 | X |
| Example 20 | 8 | 1.0 | E | 1.6 | X |
| Example 21 | 8 | 1.0 | F | 1.2 | X |
| Example 22 | 8 | 1.0 | G | 1.1 | X |
| Example 23 | 8 | 1.0 | H | 1.7 | X |
| Example 24 | 8 | 1.0 | I | 1.5 | X |
| Example 25 | 11 | 1.0 | I | 1.5 | X |
| Example 26 | 8 | 1.0 | J | 1.3 | X |
| Example 27 | 12 | 1.1 | M | 1.6 | Y |
| Comparative Example 5 | 8 | 1.0 | K | 1.0 | X |
| Comparative Example 6 | 8 | 1.0 | L | 1.8 | X |

### (Evaluation Test)

### (Physical Characteristics)

The evaluation of the physical characteristics was made for the compression rubber layers in the anti-calender direction and the adhesive rubber layers in the calender direction, which were formed by using the respective compositions. Specifically, the hardness was measured according to JIS K 6253, and the tensile strength and the elongation at break were measured according to JIS K 6251. The results are shown in Table 11.

**[Table 11]**

| Adhesive Rubber Layer | Comp. 11 | Comp. 12 | | | | | | | | |
|---|---|---|---|---|---|---|---|---|---|---|
| Hardness (JIS-A) | 83 | 84 | | | | | | | | |
| Tensile Strength (MPa) | 16.0 | 18.0 | | | | | | | | |
| Elongation at Break (%) | 370 | 320 | | | | | | | | |

| Compression Rubber Layer | Comp. D | Comp. E | Comp. F | Comp. G | Comp. H | Comp. I | Comp. J | Comp. K | Comp. L | Comp. M |
|---|---|---|---|---|---|---|---|---|---|---|
| Hardness (JIS-A) | 93 | 92 | 90 | 86 | 98 | 93 | 88 | 85 | 97 | 93 |
| Tensile Strength (MPa) | 10.0 | 10.0 | 10.0 | 11.0 | 9.0 | 11.0 | 11.0 | 11.0 | 8.0 | 12.0 |
| Elongation at Break (%) | 250 | 250 | 220 | 250 | 220 | 270 | 200 | 250 | 270 | 300 |

### (Belt Running Test)

The results of the belt running test of the V-ribbed belts of Examples 19 to 27 and Comparative Examples 5 and 6 are shown in Table 12.

**[Table 12]**

| | Belt Running Test | | |
|---|---|---|---|
| | Operating Life | Test End Mode | Judgment |
| Example 19 | 80 hrs or longer | - | ○ |
| Example 20 | 80 hrs or longer | - | ○ |
| Example 21 | 60 hrs or longer | Ended due to pop-out of core wires | ○ |
| Example 22 | 40 hrs or longer | Ended due to pop-out of core wires | ○ |
| Example 23 | 80 hrs or longer | - | ○ |
| Example 24 | 30 hrs | Ended due to pop-out of core wires | ○ |
| Example 25 | 30 hrs | Ended due to pop-out of core wires | ○ |
| Example 26 | 40 hrs | Ended due to pop-out of core wires | ○ |
| Example 27 | 80 hrs or longer | - | ○ |
| Comparative Example 5 | 15 hrs | Ended due to pop-out of core wires | × |
| Comparative Example 6 | 10 hrs | Ended due to pop-out of core wires | × |

| | | | |
|---|---|---|---|
| *In "Comparative Example 6", cracks of the adhesive rubber layer, as well as the pop-out of the core wires were observed. | | | |

From the results of Table 12, it can also be seen that a power transmission belt that is characterized by including a rubber layer formed of a cross-linked rubber composition and extending in a belt lengthwise direction, and core wires adhered to the rubber layer and embedded therein in the belt lengthwise direction, wherein the rubber layer with the core wires embedded therein is formed to have a tensile stress of 1.1 to 1.7 MPa when it is stretched in the belt lengthwise direction by 10% at 125°C, has an improved long-term durability.

### (Examples 28 to 35, Comparative Examples 7 and 8)

### (Fabrication of a Power Transmission Belt)

Power transmission belts were fabricated in the same manner as the aforesaid Examples 1 to 9 and Comparative Examples 1 and 2, except that rubber compositions for a compression rubber layer respectively having the compositions (compositions D to M) shown in Table 9 each were formed into a sheet by a calender roll, thus forming unvulcanized sheets, which were used along with core wires in combination as shown in Table 13, and V-ribbed belts were fabricated with no separate arrangement of an adhesive rubber layer and a compression rubber layer.
Specifically, a rubber-coated canvas and an unvulcanized sheet for a compression rubber layer were partially wound around a cylindrical molding drum having a circumference of 1000 mm, a core wire was spirally spun therearound, and a unvulcanized sheet for the remaining compression rubber layer was wound therearound, thereby preparing an unvulcanized laminate, which was vulcanized in a vulcanizing vessel, and ribs were formed and the laminate was cut into a V-ribbed belt having a circumference of about 1000 mm.

The unvulcanized sheets having the compositions D to M were processed to have the respective V-ribbed belts having the transverse direction thereof oriented in the calender direction.
A toluene solution was prepared by dissolving the same composition as the rubber compositions for an adhesive rubber layer of the compositions D to M by toluene, and core wires were previously dipped therein and dried, in the same manner as in Examples 1 to 9 and Comparative Examples 1 and 2.

The unvulcanized sheets used in Examples and Comparative Examples each were laminated with a thickness of about 2.0 mm having each calender direction aligned in a given direction, and subjected to pressure vulcanization at 160°C for 35 minutes under a face pressure of 3920 kPa. Thus, 2.0 mm-thickness specimens respectively simulating the adhesive rubber layers of the V-ribbed belts having core wires adhered to and embedded therein, of Examples and Comparative Examples were prepared.
The thus prepared sheet specimens were subjected to tensile tests in the calender direction, following ASTM-D412, in an atmosphere at 125°C and at a tensile rate of 6 inches/min, and loads (N) that are being applied to the respective specimens when they have been stretched by 10% were measured, and each load was divided by an initial sectional area (mm²) of the corresponding specimen. Thus, the tensile stresses (MPa) were determined. The results are shown in Table 13.

**[Table 13]**

| | Adhesive Rubber Layers | | Core Wires Used |
|---|---|---|---|
| | Compositions Used | Tensile Stresses (MPa) | |
| Example 28 | D | 1.6 | X |
| Example 29 | E | 1.6 | X |
| Example 30 | F | 1.2 | X |
| Example 31 | G | 1.1 | X |
| Example 32 | H | 1.7 | X |
| Example 33 | I | 1.5 | X |
| Example 34 | J | 1.3 | X |
| Example 35 | M | 1.6 | Y |
| Comparative Example 7 | K | 1.0 | X |
| Comparative Example 8 | L | 1.8 | X |

### (Evaluation Test)

### (Belt Running Test)

The results of the belt running test of the V-ribbed belts of Examples 28 to 35, and Comparative Examples 7 and 8 are shown in Table 14.

### (Core Wire Adhesive Power Measurement)

The unvulcanized sheets respectively used in Examples and Comparative Examples each were laminated with a thickness of about 6.0 mm, having each calender direction aligned in a given direction, plural core wires were disposed therein and the unvulcanized sheets each were laminated with a thickness of about 1.0 mm. Thus, each laminate having a total thickness of about 7.0 mm was prepared. The lengthwise direction of the core wires was oriented orthogonal to the calender direction of the unvulcanized sheet, and the core wires were disposed in parallel with each other at a given spacing.
The core wire adhesive power of each laminate was measured, in the same manner as that described in Examples 1 to 9 and Comparative Examples 1 and 2. The results are shown in Table 14.

**[Table 14]**

| | Belt Running Test | | | Core Wire |
|---|---|---|---|---|
| | Operating Life | Test End Mode | Judgment | Adhesive Power (kgf/3 pieces) |
| Example 28 | 80 hrs or longer | - | ○ | 13.0 |
| Example 29 | 80 hrs or longer | - | ○ | 13.0 |
| Example 30 | 80 hrs or longer | - | ○ | 12.0 |
| Example 31 | 80 hrs or longer | - | ○ | 12.0 |
| Example 32 | 80 hrs or longer | - | ○ | 16.0 |
| Example 33 | 40 hrs | Ended due to pop-out of core wires | ○ | 11.5 |
| Example 34 | 50 hrs | Ended due to pop-out of core wires | ○ | 11.0 |
| Example 35 | 80 hrs or longer | - | ○ | 14.0 |
| Comparative Example 7 | 15 hrs | Ended due to pop-out of core wires | × | 13.0 |
| Comparative Example 8 | 10 hrs | Ended due to pop-out of core wires | × | 11.0 |

| | | | | |
|---|---|---|---|---|
| *In "Comparative Example 8", cracks of the rubber layer, as well as the pop-out of the core wires were observed. | | | | |

From the results of Table 14, it can also be seen that a power transmission belt that is characterized by including a rubber layer formed of a cross-linked rubber composition and extending in a belt lengthwise direction, and core wires adhered to the rubber layer and embedded therein in the belt lengthwise direction, wherein the rubber layer with the core wires embedded therein is formed to have a tensile stress of 1.1 to 1.7 MPa when it is stretched in the belt lengthwise direction by 10% at 125°C, has an improved long-term durability.

### (Examples 36 to 45)

### (Fabrication of a Power Transmission Belt)

Power transmission belts were fabricated in the same manner as Example 1, except that a rubber composition for an adhesive rubber layer of the composition (composition 13) shown in Table 16 was used; rubber compositions for a compression rubber layer of the compositions (compositions N to W) shown in Table 17 were used; and core wires mentioned below were used.

**[Table 15]**

| | Adhesive Rubber Layer | Compression rubber layer |
|---|---|---|
| | Compositions Used | Compositions Used |
| Example 36 | 13 | N |
| Example 37 | 13 | O |
| Example 38 | 13 | P |
| Example 39 | 13 | Q |
| Example 40 | 13 | R |
| Example 41 | 13 | S |
| Example 42 | 13 | T |
| Example 43 | 13 | U |
| Example 44 | 13 | V |
| Example 45 | 13 | W |

**[Table 16]**

| Mixed Ingredients | "Trade Name", Manufacturer | Composition 13 |
|---|---|---|
| EPDM | "3085" made by Mitsui Chemicals | 100 |
| Carbon Black | "IP600" made by Showa Cabot | 50 |
| Silica | "TOKUSEAL GU" made by Tokuyama | 20 |
| Paraffinic Process Oil | "SUNPAR 2280" made by Sun Oil | 10 |
| Stearic Acid | "STEARIC ACID" made by Kao | 1 |
| Zink Oxide | "ZINC WHITE NO. 1" made by Sakai Chemical Industry | 5 |
| Tackifier | "Quinton A-100" made by Zeon | 5 |
| Organic Peroxide | "PERCUMYL D" (DCP) made by NOF Corporation | 2.5 |
| Short Fiber | Cotton Powder | 2 |

**[Table 17]**

| Mixed Ingredients | "Trade Name", Manufacturer | Comp. N | Comp. O | Comp. P | Comp. Q | Comp. R | Comp. S | Comp. T | Comp. U | Comp. V | Comp. W |
|---|---|---|---|---|---|---|---|---|---|---|---|
| EPDM | "NORDEL 4640" made by Dow Chemical | 95 | 95 | 99 | 80 | 95 | 95 | 95 | 100 | 75 | 99.5 |
| Phenol Resin | "SUMILITE RESIN PR13355" made by Sumitomo Bakelite | 5 | - | 1 | 20 | - | - | - | - | 25 | 0.5 |
| Modified Melamine Resin | "NIKARESIN NL" made by Nippon Carbite Industry | - | 5 | - | - | - | - | - | - | - | - |
| High-styrene Resin | "JSR0061" made by JSR | - | - | - | - | 5 | - | - | - | - | - |
| Vinyltoluene Resin | "VINYLTOLUENE RESIN" made by Eastman Chemical | - | - | - | - | - | 5 | - | - | - | - |
| Coumarone Indene Resin | "V·120" made by Nippon Steel Chemical | - | - | - | - | - | - | 5 | - | - | - |
| Carbon Black | "SEAST 3" made by Tokai Carbon | 70 | 70 | 70 | 70 | 70 | 70 | 70 | 70 | 70 | 70 |
| Paraffinic Process Oil | "SUNPAR 2280" made by Sun Oil | 10 | 10 | 10 | 10 | 10 | 10 | 10 | 10 | 10 | 10 |
| Stearic Acid | Bead stearic acid "TSUBAKI" made by NOF Corporation | 0.5 | 0.5 | 0.5 | 0.5 | 0.5 | 0.5 | 0.5 | 0.5 | 0.5 | 0.5 |
| Zink Oxide | "ZINC WHITE NO. 1" made by Sakai Chemical Industry | 5 | 5 | 5 | 5 | 5 | 5 | 5 | 5 | 5 | 5 |
| Organic Peroxide | "PERCUMYL D40" (DCP) made by NOF Corporation | 3 | 3 | 3 | 3 | 3 | 3 | 3 | 3 | 3 | 3 |
| Sulfur | "OIL SULFUR" made by Tsurumi Chemical Industry | 0.3 | 0.3 | 0.3 | 0.3 | 0.3 | 0.3 | 0.3 | 0.3 | 0.3 | 0.3 |
| Nylon Short Fiber | "66 Nylon, 6 de. by 1 mm" made by Asahi Kasei | 20 | 20 | 20 | 20 | 20 | 20 | 20 | 20 | 20 | 20 |

### (Core Wire)

Polyester cords made by Teijin Limited (1000 denier/2 × 3, Final twist: 9.5T/10 cm(Z), Preliminary twist: 2.19T/10 cm) were dipped in a toluene solution of isocyanate (having an isocyanate solid content of 20% by mass), and heated and dried at a temperature of 240°C for 40 seconds to effect pretreatment of polyester cords.
Then, the pretreated core wires were dipped in an RFL adhesive composition (see below), then dried with heated air at 200°C for 80 seconds, then dipped in a toluene solution of EPDM (made by Mitsui Chemicals, Inc. under the trade name of "3085", ethylene content: 62% by mass, propylene content: 33.5% by mass, diene content: 4.5% by mass), and dried with heated air at 60°C for 40 seconds.

### (Adjustment of an RFL Adhesive Composition)

7.31 parts by weight of resorcin and 10.77 parts by weight (37% by mass) of formalin were mixed together, and sodium hydroxide aqueous solution (solid content: 0.33% by mass) was added thereto and stirred, then 160.91 parts by weight of water was added thereto, and the mixture was aged for 5 hours. Thus, a resorcin-formalin resin (resorcin-formalin primary condensate, hereinafter referred to "RF", resorcin/formalin ratio=0.5) aqueous solution was prepared.
Then, a chlorosulfonated polyethylene latex (solid content: 40%) was added to and mixed with this RF aqueous solution to have the RF/latex ratio equal to 0.25 (solid content: 45.2 parts by weight), and water was further added to have a solid content concentration of 20% and then stirred while being aged for 12 hours. Thus, the RFL adhesive composition was adjusted.

### (Belt Running Test)

A belt running test was conducted in the same manner as Examples 1 to 35, except that the atmospheric temperature was 80°C in place of 130°C.
Specifically, by using a device illustrated in FIG. 4, each V-ribbed belt of Examples 36 to 45 was wound between a driving pulley 11 (diameter: 120 mm) and a driven pulley 12 (diameter: 120 mm), and around an idler pulley 14 (diameter: 70 mm) and a tension pulley 13 (diameter: 45 mm), and the driving pulley was rotated at 4900 rpm with the load of the driven pulley being 16 horsepower and the set weight of the tension pulley 13 being 85 kgf.
This running test was conducted for 100 hours; the reduction in mass after the running test was measured in which the initial mass before the running test was designated as 100%; and the difference in mass was measured as an amount of abrasion. In judgment, a symbol "○" represents those showing 3% or smaller of the amount of abrasion, and a symbol "×" represents those showing more than 3% of the amount of abrasion. The results are shown in Table 18.

**[Table 18]**

| | Abrasion Loss | Judgment |
|---|---|---|
| | (%) | - |
| Example 36 | 2.1 | ○ |
| Example 37 | 2.6 | ○ |
| Example 38 | 2.7 | ○ |
| Example 39 | 2.6 | ○ |
| Example 40 | 2.8 | ○ |
| Example 41 | 2.8 | ○ |
| Example 42 | 2.9 | ○ |
| Example 43 (*) | - | × |
| Example 44 | 3.1 | × |
| Example 45 (*) | - | × |

| | | |
|---|---|---|
| * In Examples 43 and 45, surface cracks were observed after the elapse of 80 hours and therefore the abrasion losses were not measured and they were judged as "×". | | |

From the results of Table 18, it can be seen that it is possible to improve abrasion resistance and durability, of a power transmission belt by forming a power transmission side of the power transmission belt by a rubber composition in which 1 to 20% by mass of at least one organic reinforcing agent selected from the group consisting of phenol resin, high-styrene resin, coumarone indene resin, amino resin, vinyltoluene resin, lignin resin, butyl-phenol-acetylene resin, and xylene formaldehyde resin relative to rubber.

## Claims

1. A power transmission belt **characterized in that** it comprises a rubber layer that is formed of a cross-linked rubber composition and extends in a belt lengthwise direction, and core wires that are adhered to the rubber layer and embedded therein in the belt lengthwise direction,
wherein the rubber layer with the core wires embedded therein is formed to have a tensile stress of 1.1 to 1.7 MPa when the rubber layer is stretched in the belt lengthwise direction by 10% at 125°C.

2. The power transmission belt according to claim 1, further comprising a compression rubber layer that is formed of a cross-linked composition and extends in the belt lengthwise direction, an adhesive rubber layer that is adhered to the compression rubber layer and extends in the belt lengthwise direction, core wires that are adhered to the adhesive rubber layer and embedded therein, wherein the adhesive rubber layer is formed to have a tensile stress of 1.1 to 1.7 MPa when the adhesive rubber layer is stretched in the belt lengthwise direction by 10% at 125°C.

3. The power transmission belt according to any one of claims 1 and 2, wherein the rubber composition for use in the rubber layer with the core wires embedded therein contains an organic reinforcing agent.

4. The power transmission belt according to claim 3, wherein any one of a thermosetting phenol resin and a thermosetting melamine resin is used for the organic reinforcing agent.

5. The power transmission belt according to any one of claims 2 to 4, wherein ethylene-α-olefin elastomer is used as a base rubber of the rubber composition for use in the adhesive rubber layer.

6. The power transmission belt according to any one of claims 2 to 5, wherein the adhesive rubber layer is formed of the rubber composition cross-linked by sulfur.

7. The power transmission belt according to any one of claims 1 to 6, wherein the core wires are subjected to a resorcin-formalin-latex treatment, using a latex that contains, as a polymer component, any one of a homopolymer that contains as a repeating unit chlorosulfonated ethylene, alkylsulfonated ethylene or modified products thereof, a copolymer that uses plural kinds of these repeating units, and a copolymer that contains at least one kind of these repeating units and a different repeating unit.

8. The power transmission belt according to any one of claims 1 to 7, wherein a rubber composition for forming a power transmission side is mixed with 1 to 20% by mass of at least one inorganic reinforcing agent selected from the group consisting of phenol resin, high-styrene resin, coumaroneindene resin, amino resin, vinyltoluene resin, lignin resin, butyl-phenol-acetylene resin and xylene formaldehyde resin, relative to rubber.

9. The power transmission belt according to claim 8, wherein the organic reinforcing agent is a thermosetting phenol resin.

10. The power transmission belt according to any one of claims 8 and 9, wherein the rubber for use in the rubber composition of the power transmission side is an ethylene-α-olefin copolymer rubber.

11. The power transmission belt according to any one of claims 8 to 10, wherein the power transmission belt is a V-ribbed belt.
